# EUROPEAN PATENT APPLICATION

(11) **EP 1 475 213 A1**
(43) Date of publication of application: **10.11.2004**
(21) Application number: 03701047.7
(22) Date of filing: 09.01.2003
(51) Int. Cl.: B29C 47/08

(54) **METHOD FOR MANUFACTURING DOUBLE−WALL CORRUGATED TUBE**

(30) Priority: 14.02.2002 JP 2002037396
(71) Applicant: DENKI KAGAKU KOGYO KABUSHIKI KAISHA, Chiyoda-ku, Tokyo 100-8455 (JP)
(72) Inventor: Haraguchi, Hideto, c/o Denki Kagaku Kogyo KK, Kamakura-shi, Kanagawa 247-8510 (JP); Hasegawa, Noboru, c/o Denki Kagaku Kogyo KK, Kamakura-shi, Kanagawa 247-8510 (JP); Tsugawa, Daisuke, c/o Denki Kagaku Kogyo KK, Kamakura-shi, Kanagawa 247-8510 (JP); Urabe, Hiroshi, c/o Denki Kagaku Kogyo KK, Kamakura-shi, Kanagawa 247-8510 (JP)
(74) Representative: Leson, Thomas Johannes Alois, Dipl.-Ing.
(86) International application number: PCT/JP2003/000135
(87) International publication number: WO 2003/068482

(57) **Abstract**

For simply and surely manufacturing a double wall corrugated pipe, there is provided a method for manufacturing a double wall corrugated pipe having a slot part 3 on one end, a socket part 2b on the other end, an external wall 6 of a continuous irregular shape, and an inner wall 7 of a tubular shape by subjecting a thermoplastic resin to extrusion molding, comprising at least: a first cutting step in which a double-wall continuous tubular body 1a to be extrusion molded in a state of which the socket part 2b (2a) and the slot part are being coupled together is cut off at an external wall part X corresponding to the end portion of the socket part 2b and at an external wall part Y corresponding to the end of the slot part 3; and a second cutting step in which a cutting unit is inserted to a predetermined position from a socket part 2a side opening to an internal cavity portion 9 of the double wall single tubular body 1b obtained in the first cutting step, and the inner wall 7 is cut off in a circumferential direction while a cutter Cz protruded from the cutting unit U is brought into contact with an inner wall part Z from which the socket part 2a is started.

## Description

### Technical Field

The present invention relates to a method for manufacturing a double wall corrugated pipe. In particular, the present invention relates to a method for manufacturing a double wall corrugated pipe to be used for a general-purpose drainage pine, an information box protecting tube, and so on, which is formed by extrusion such that a cylindrical inner wall is heat-fused on the inner side of a reinforcing external wall having projections and depressions.

### Background Art

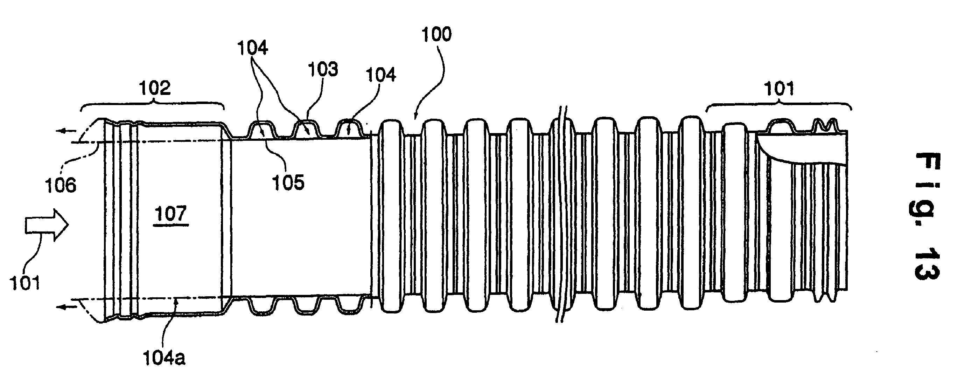

At first, according to the attached Fig. 13, a general conformation of a double wall corrugated pipe will be described.

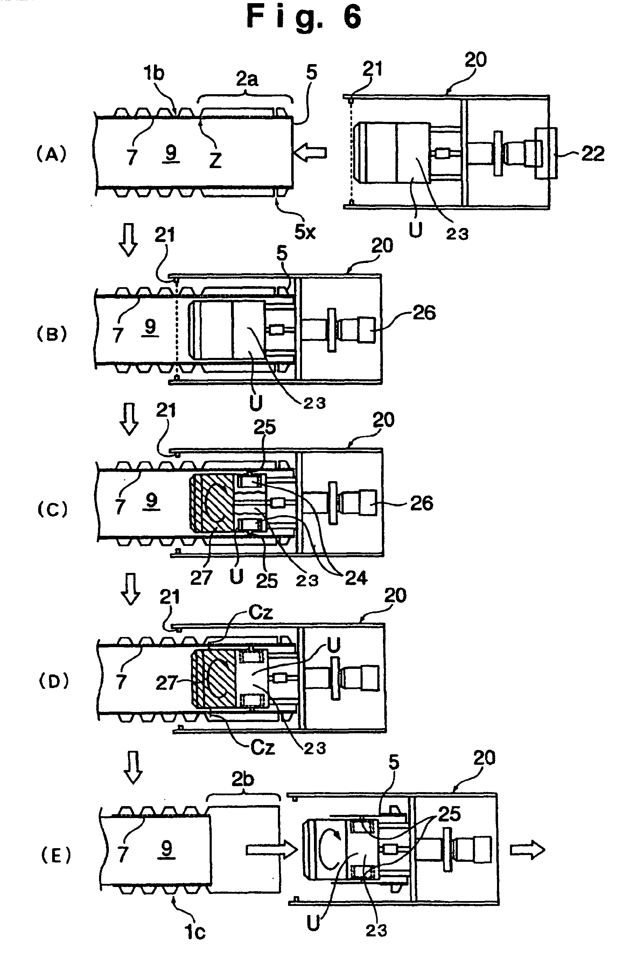

The double wall corrugated pipe denoted by the reference numeral 100 is a tubular body of a single connection unit having a slot part 101 on the one end thereof and a socket part 102 on the other end thereof, which is cut after continuous extrusion molding of a thermoplastic resin. This double wall corrugated pipe 100 comprises: an external wall 103 having projections and depressions from an outward appearance; and a cylindrical inner wall 105 which is heat fused in the inside of the external wall 103 while forming hollow chambers 104. The socket part 102 has a leaving portion 106 represented by a phantom line in Fig. 6 to be removed by cutting with a predetermined procedure after molding, so that it will be designed to have an inner wall surface shape where the slot part 101 can be attached by insertion.

Here, in the manufacturing step of the double wall corrugated pipe 100 of the above configuration, A cutting step is performed to obtain a single connection unit of a double wall corrugated pipe 100 such that a tube continuously molded by extrusion in the state that the slot part 101 and the socket part 102 are connected to each other from the beginning (in this application, referred to as a "double wall continuous tubular body") is cut between the slot part 101 and the socket part 102 which are formed adjacently to each other.

In addition, in the step of manufacturing the double wall corrugated pipe 100, in the molding process, the air pressure in the hollow chamber 104 obstructed by inner and extracellular walls decreases as the molded corrugated pip is cooled off. The external wall tends to be deformed and crushed before completely solidified.

In particular, such a tendency is conspicuous in the socket part 102 having a large volume hollow chamber. Unless the deformation of the socket part 102 is solved, the manner in which the slot part 101 is attached in the socket part 102 by insertion is interfered.

Therefore, conventionally, in the molding step, to cope with the above problem, compressed gas is injected into the hollow chamber 104a of the socket part 102 and a compressor (not shown in the figure) having a perforating function is inserted into an inner cavity 107 of the corrugated pipe 100 to form pores in the inner wall.

For instance, in JP-B 03-65262, there is disclosed a method for forming a single-wall bell-shaped part on the double wall pipe. In the gazette, prior to substantial cooling-down of a pipe (corrugated pipe), there is disclosed a method for manufacturing a double wall pipe (double wall corrugated pipe) which is devised such that the hollow chambers located between the interior and exterior wall parts are ventilated while keeping the shape of the inner wall by forming pores in the inner wall at the respective bell-shaped parts.

However, the conventional technology described above had the technical problems described above. First, since the cutting step in the process of manufacturing the double well corrugated pipe was complicated, there was a first technical problem in that works were complicated.

Next, in the step of preventing the deformation of a socket part, a device for injecting compressed gas and the step of adjusting pressure are required. In addition, there were needs of inserting a compressor for perforating the inner wall into the inner cavity of the corrugated pipe and providing apparatuses such as a cutter and an actuator for actuating the cutter to make pores into the inner wall. In other words, there are a large number of devices required for preventing the deformation of the external wall. In addition, costs for these devices are high, and also the forming steps thereof have been complicated because of the structural features including the formation of pores in an inner wall.

Therefore, the first object of the present invention is to provide a cutting process that allows a work to be done simply and smoothly, and the second object thereof is to provide a method for simply and surely manufacturing a double wall corrugated pipe having a socket part of a predetermined shape without requiring a complicated and large-scaled device complex, without complicating arrangements at the time of manufacture, and without requiring a complicated gas pressure adjustment.

### Disclosure of the Invention

For solving the above technological problems, the present invention adopts the flowing means:

First, the present invention provide a method for manufacturing a double wall corrugated pipe having a slot part on one end, a socket part on the other end, an external wall of a continuous irregular shape, and an inner wall of a tubular shape by subjecting a thermoplastic resin to extrusion molding, comprising at least the following steps (1) and (2):
(1) a first cutting step in which a double-wall continuous tubular body to be extrusion molded in a state of which the socket part and the slot part are being coupled together is cut off at an external wall part corresponding to the end portion of the socket part and at an external wall part corresponding to the end of the slot part; and
(2) a second cutting step in which a cutting unit is inserted to a predetermined position from a socket part side opening to an internal cavity portion of the double wall single tubular body obtained in the first cutting step, and the inner wall is cut off in a circumferential direction while a cutter protruded from the cutting unit is brought into contact with an inner wall part from which the socket part is started.

First, the above first cutting step is a step for obtaining a double wall single tubular body by separating a double wall continuous tubular body in the shape of an elongated tube being currently extruded from a molding machine. A socket part of the double wall single tubular body is still attached with a discarding tube part. Thus, it is in a state of which a socket function capable of attaching a slot part by insertion cannot be exerted.

Furthermore, in the present application, the "discarding tubular part" means that a series of corrugated pipes continuously extrusion-molded are decoupled at predetermined positions and provided as additional parts to be removed at the time of obtaining a corrugated pipe as a single connection unit as a final product and also provided as a portion on which a hollow chamber is formed, which obstructs the socket part at the stage of being extrusion-molded.

Next, the above second cutting step includes the steps of removing an excess discarding tube part from the double wall single tubular body as an intermediate product obtained from the first cutting step and obtaining a double wall corrugated pipe as a final product. The socket part from which the discarding tube part has removed is functioned as a socket.

Next, in the present application, a method for manufacturing a double wall corrugated pipe in which the above second cutting step include at least the following steps of (a) to (c):
(a) supporting the inner wall by striking a chuck part protruded from the cutting unit on the inner wall;
(b) after the previous step, cutting the inner wall by the cutter protruded from a tip head part of the cutting unit to the inner wall portion, while rotating the tip head part; and
(c) after the previous step, removing a discarding tube portion by housing the cutter in the tip head part, and pulling out the discarding tube portion separated from the double wall single tubular body, while retaining the discarding tube portion.

The above second cutting step can be automatically performed by sequentially performing the above steps (a) to (c) in order such that the inner wall of the socket part is surely held without causing its movement, while cutting surely at a predetermined inner wall position to separate the discarding tube part and pulling out as it is.

Furthermore, in the present invention, in the molding step, "the step of maintaining the shape of the socket part" in a molding step may be performed before the first cutting step, wherein before a tubular body to be extrusion molded is cooled down, a needle is stabbed into the external wall of the socket part to allow the hollow member of the socket part to communicate with the air to prevent deformation of the external wall of the socket part accompanied with a decrease in temperature.

Here, a suitable part of the external wall where the needle is stuck into is a part without affecting the quality of the final product even though any pore is formed therein. That is, the external wall part of the discarding tube part in the socket part being extrusion-molded.

In the above step of maintaining the shape of the socket part, substantially veering the technical idea of predetermined penetrating device to be inserted into the inner cavity part of the above socket part, a pore is formed such that the external part, more specifically an external wall part of the above discarding tube part to be continuously mounted on the socket part is selected and a pore is formed therein. Furthermore, a simple method is adopted such that the formation of a pore in an external wall is carried out by stabbing a simple member of a needle into the external wall.

When the pore is formed in the external wall part of the socket part, a hollow chamber obstructed by the internal and external walls of the socket part is allowed to communicate with the air and thus the inner pressure of the hollow chamber becomes atmospheric pressure. As a result, it becomes possible to effectively prevent the deformation (crushing) of the socket part concurrently occurred with a decrease in volume of the hollow chamber caused by a decrease in temperature in the molding process.

More specifically, it is possible to adopt means by which the needle is attached on a metallic mold for molding the external wall of the socket part and the needle is then stabbed into the external wall of the socket part at predetermined timing with the motion of a molding machine.

In other words, in the molding machine used in the manufacturing method of the present invention, two or more kinds of metallic molds required for molding a corrugated pipe into a predetermined external shape are arranged in predetermined order such that the corresponding upper and lower molds form a pair. In the molding process, the metallic mold complex repeats the movement of turning around like a caterpillar.

Then, a metallic mold to be involved in molding the external wall of the socket part is selected from the metallic mold complex and is then provided with a needle at a predetermined position so that it will project toward the resin. At the time of molding the external wall of the socket part, this needle is stabbed into the external wall of the socket part currently in the process of molding and the tip of the needle is stabbed and inserted into the hollow chamber of the socket part.

Here, in the manufacturing method of the present invention, the needle which may be suitably adopted in particular is one in the form of a tube with a hollow therein to communicate with the air and a tip portion thereof has an inclined surface facing laterally and presenting the letter of " 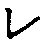 ".

The inclined surface facing laterally and presenting generally the letter " 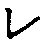 " means that the cylindrical tip is cut off crosswise only once from a predetermined upper position to the downward. Besides, but needless to say, the tip portion of the needle being stabbed and inserted into the hollow member of the socket part opens into an internal cavity.

According to the configuration of the needle described above, the hollow member of the socket part becomes possible to communicate with the air through the internal cavity portion of the needle as the same time as the needle is stabbed and inserted into the external wall of the socket part. In addition, as the tip portion in the form of the letter " 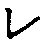 " facing laterally is sharp, it does not give a warp on the external wall of the socket as it is not forcefully inserted. Therefore, the needle can quickly penetrate the external wall and is easily stabbed and inserted into the hollow chamber of the socket part.

Furthermore, the present invention adopts the configuration the tip portion of the needle such that the needle is stabbed while the inclined surface of the tip portion is arranged in the direction opposite to the direction of extrusion molding. Therefore, comparing with the arrangement of the inclined surface in the direction parallel to that of the extrusion molding, it is apparent that an effect of forming a pore more easily will be exerted. Particularly, at the stage of extrusion molding, the above action can be dominantly exerted when the needle is stabbed into the inclined wall surface of a discarding tube part which is being successively formed on the socket part.

As described above, the present invention has a technical signification in that a double wall corrugated pipe having a socket part of a predetermined shape in which a slot part can be surely inserted and fixed can be reliably manufactured with a simplified device configuration.

### Brief Description of the Drawings

Fig. 1 is a view showing the outline of a molding method used in a method for manufacturing a double wall corrugated pipe of the present invention.
Fig. 2 is a view showing a step for manufacturing a double wall corrugated pipe of the same manufacturing method of the present invention.
Fig. 3 is a view showing the conditions from a double-wall continuous tubular body (1a) to obtain a double wall corrugated pipe (1c) as a final product at the cutting step.
Fig. 4 is a partially omitted general side view of a first cutting device (10).
Fig. 5 is a front view of the same device (10).
Fig. 6 is a process flow chart of a second cutting step.
Fig. 7 is an external view of a separated discarding tube part(5).
Fig. 8 is (A) a partial cross sectional view of the tip portion (Sb) of a needle (S) suitable for a manufacturing method of the present invention; and (B) a partial front view viewing from the direction of the arrow P, of the inclined surface (Sc) of the tip portion (Sb) of the needle (S).
Fig. 9 (Table) is a table showing the results of the first experiment.
Fig. 10 is (A) a view showing a needle (S₁) having a pointed tip portion, and (B) a view showing a needle (S₂) having a reversed-V-shaped tip portion.
Fig. 11 (Table) is a table showing the results of the second experiment.
Fig. 12 is (A) a view showing the pore-opening state of Test No. 1 of the second experiment, and (B) a view showing the pore-opening state of Test No. 2 of the second experiment.
No. 13 is an external view of the generally conventional double wall corrugated pipe (100).

### Best Mode for Carrying Out the Invention

Hereinafter, preferred embodiments of the present invention will be described with reference to the attached drawings.

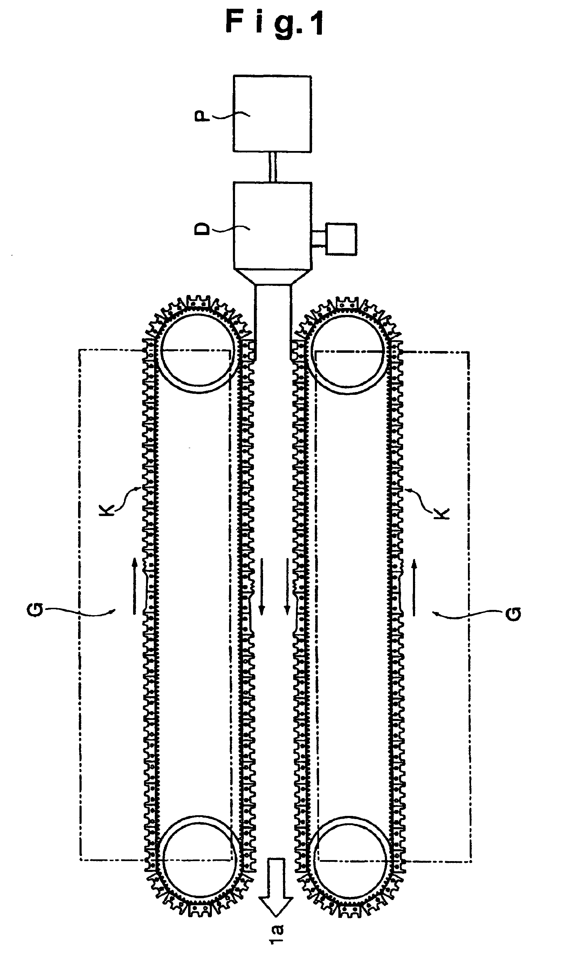

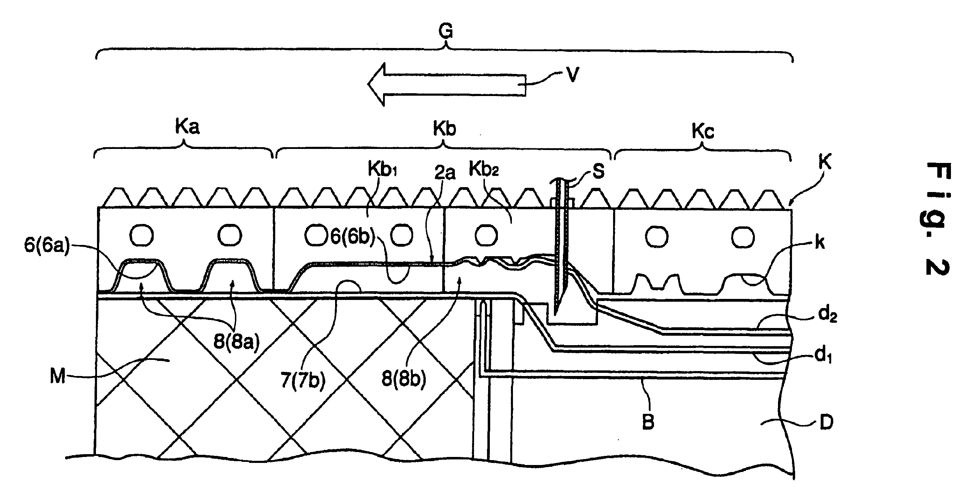

First, according to Fig. 1 and Fig. 2, the process of extrusion molding of a double wall corrugated pipe in accordance with the present invention will be described. In addition, Fig. 1 is a diagram that illustrates the outline of a molding device to be used in the method for manufacturing the double wall corrugated pipe of the present invention. Fig. 2 is a diagram that illustrates the state of one process by which the double wall corrugated pipe is molded in the same manufacturing method.

The molding device comprises an extruder P for extruding a thermoplastic resin in a molten state, a dice D coupled to the extruder P, and a molding machine G in which a pair of upper and lower metallic mold complexes K involved in external wall molding is provided by inner peripheral grooves k (see Fig. 2) of a predetermined shape. The molding machine G has the molding-machine function, the cooler function, and puller function in combination.

The metallic mold complex K comprises two or more kinds of metallic molds Ka, Kb (Kb₁, Kb₂), Kc which are coupled together in a predetermined order as shown in Fig. 2 are arranged such that they can be continuously driven like a caterpillar in the direction V of extruding a molten resin.

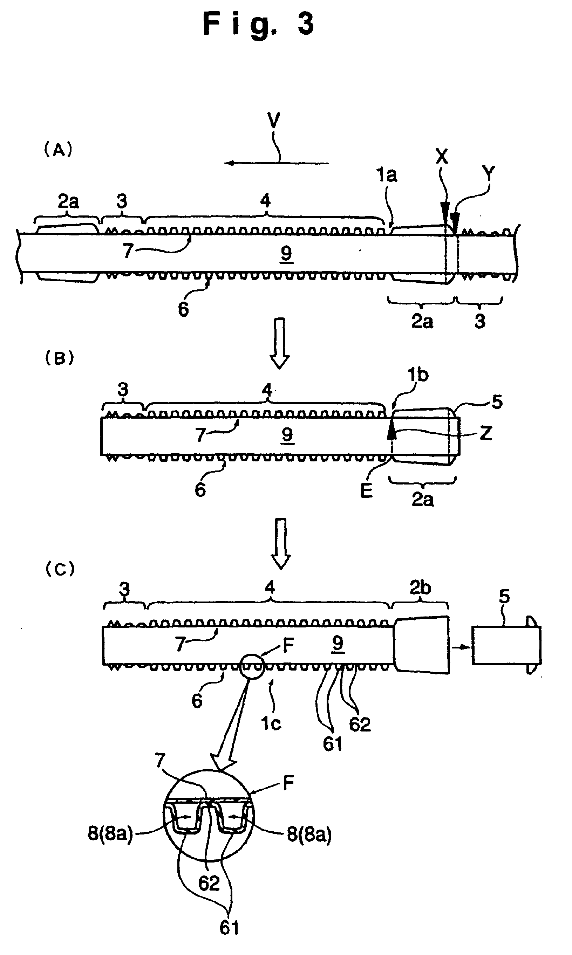

A tubular body formed from a thermoplastic resin in a molten state extruded from double-walled circular dices d1, d2 (see Fig. 2) extendingly provided in the inside of the above dice D is continuously molded by extrusion from the extruder G such that it is molded by an extended walls 6 having an irregular shape, which is formed by a pair of upper and lower metallic mold complexes K described above and a double-walled continuous tubular body 1a (see Fig. 3(A)) having a cylindrical inner wall 7, while being cooled and solidified.

More specifically, the external surface having the shape of protrusions and depressions is shaped by pressing the metal mold complexes K of the molding machine G against a resin on the external wall side by inner pressure at a temperature not less than the softening point or not more than the melting point of the thermoplastic resin being currently extruded by the extruder P, while a pair of the upper and lower metal mold complexes K are rotating like a caterpillar to shape the external wall into the shape of protrusions and depressions. In Fig. 2, the reference mark M represents a mandrel through which cooled water flows and the reference mark B represents an air-blowing part.

As a method for bringing a molten resin into close contact with the molding machine G, any of a blow molding method for swelling with pressure air and a vacuum molding method for subjecting a metallic mold inner wall region to vacuum suction can be adopted.

In addition, the thermoplastic resins to be used in the manufacturing method of the present invention include a polyethylene resin, polypropylene resin, and vinyl chloride resin, and in particular the polyethylene resin is preferable because of its molding ability, fusing ability, and mechanical strength.

Referring now to Fig. 3, the outline of the "cutting step" (a first cutting step and a second cutting step) of a double-wall continuous tubular body 1a to be extrusion molded in the state of being continuously coupled together from the molding machine G. Here, Fig. 3 illustrates the conditions from a double-wall continuous tubular body 1a to a double wall corrugated pipe 1c as a final product by the cutting step.

### <First cutting step>

First, the double-wall continuous tubular body 1a molded by extrusion has a thin long tubular shape in the state of which the socket part 2a and the slot part 3 are still being connected with each other. According to the method described hereinafter, this double-wall continuous tubular body 1a is cut off concurrently in the circumferential direction at an external wall part represented by the reference mark X in Fig. 3(A) and an external wall part represented by the reference mark Y in the same figure.

Consequently, a double wall continuous tubular body 1b is obtained (see Fig. 3(B)), where the socket part 2a and the slot part 3 are divided at the external wall part Y.

The socket part 2a of the double wall continuous tubular body 1b is only cut at the above external wall part X, so that the inner wall 7 therein is still remained as it is.

### <Second Cutting step>

Next, the double wall continuous tubular body 1b is cut off in the circumferential direction at an inner wall part Z shown in Fig. 3(B) by the method described later, so that it can be cut off in the circumferential direction. Consequently, the discarding tube part denoted by the reference numeral 5 is separated from the inner wall 7 of the main tube part 4, resulting in a double wall corrugated pipe 1c (see Fig. 3(C) (final product) on which a socket part 2b having a socket function is formed.

Furthermore, an inner wall part Z is an inner wall position corresponding to the position represented by the reference mark E on the socket part 2a in Fig. 3(B). This reference mark E is a starting position of the socket part 2a, i.e., a position from which it becomes protruded outward.

The double wall corrugated pipe 1c shown in Fig. 3(C) comprises an external wall 6 having the shape of projections formed in a main purpose of an improvement in strength and an inner wall 7 having a cylindrical shape which is heat fused on the inner wall surface of the external wall 6. The external wall 6 has an irregular shape such that projected portions 61 and depressed portions 62 are repeatedly formed. In the inside of each projected portion 61, a circular hollow chamber 8a obstructed by the external wall 6 and inner wall 7 is formed. (see, particularly an elongated view of the F portion of Fig. 3(C)).

The reference numeral 9 in Fig. 3 shows an internal cavity portion in the inside of the inner wall 7. The internal cavity portion 9 will allow the flow of water therethrough when a double wall corrugated pipe 1c is used as a drainage pipe, while it will allow the storage of an information box or the like therein when it is used as a protecting tube.

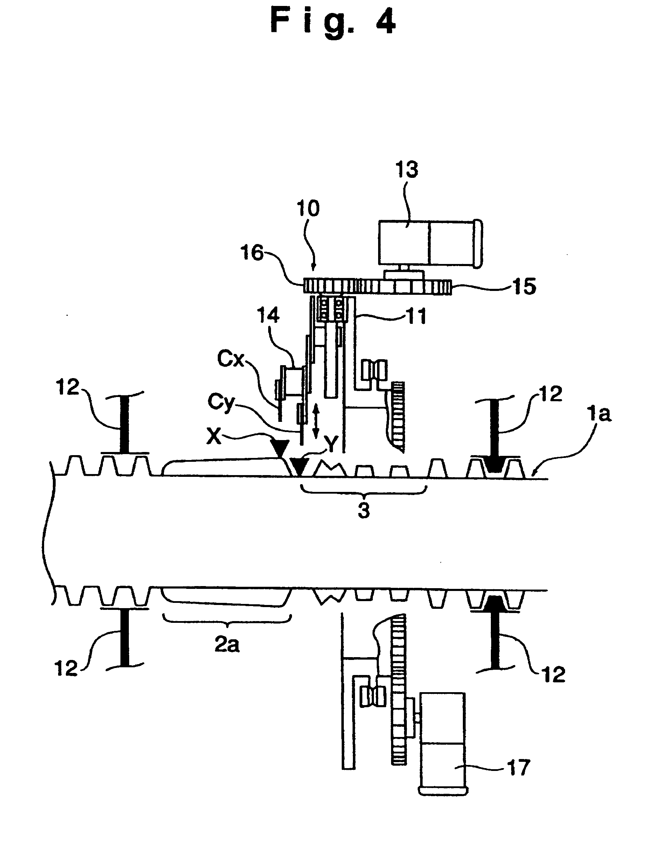

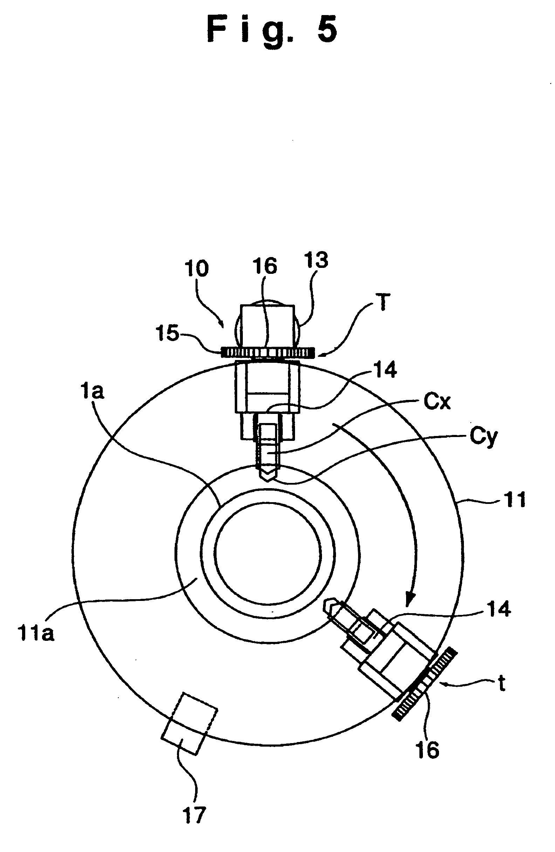

In the following description, according to Fig. 4 to Fig. 6, the concrete and preferable embodiments of the above cutting step (first and second cutting steps) will be described in detail. Fig. 4 is a partially omitted side view diagram of a first cutting device, Fig. 5 is a front view of the same device, and Fig. 6 is a step flow chart of the second cutting step.

### <First Cutting step>

First, the first cutting step is performed by a first cutting device denoted by the reference numeral 10 in Fig. 4 and Fig. 5. The first cutting device 10 is attached on a disk-shaped rotor 11 and is actuated as follows:

An actuation starting point of the first cutting device 10 corresponds to an apex position of the rotor 11, represented by the reference mark T in Fig. 5. When it receives a constant length signal from a control part not shown in the figure, the double-wall continuous tubular body 1a, which is a work transformed so as to be introduced into a pore 11a on the center of the rotor, is sandwiched by chunk 12, 12.

Next, a motor 13 mounted on the topmost part of the first cutting device 10 is rotated to allow a cut unit 14 to descend toward the work only at a predetermined distance. By the way, this descending distance may be defined in advance so as to be fit to the dimensions of the product.

The cutter unit 14 descends. When each tip of the cutters Cx, Cy retained in the unit 14 is brought into contact with each of the external wall part X and the external wall part Y, the brake of the above motor 13 is actuated and gears 15 is immobilized.

Subsequently, the motor 17 is actuated and then the rotor 11 rotates at a constant speed. At this time, a gear 16 contacts and engages the gear 15 once every revolution of the rotor. As a result, a screw 17 rotates about 1/2 and thereby the cutters Cx and Cy descends about 1 mm. It is repeated up to a predetermined number of rotation and then two portions, i.e., the external wall parts X and Y of the continuous tubular body 1c are concurrently cut off in the circumferential direction.

When the above rotor 11 rotates only a predetermined number, the rotor 11 will stop at the starting point T and the gear 15 and the gear 16 are engaged again in a state of being immobilized, so that the cutting operation can be ended. The reference mark t in the Fig. 5 represents a cutter unit 14 which is being rotated.

Then, the motor 13 releases the brake of the gear 15 and starts to rotate to send up the cutter unit 14. When the cutter unit 14 moves up to the starting point, a signal for informing the end of cutting is sent to the control part (not shown). When the cutting-ended signal is received, then the chucks 12, 12 will shift to a releasing movement.

The above process allows the formation of one double wall signal tubular body 1b (see Fig. 3(B)) can be formed form the double from the double-wall continuous tubular body 1a. That is, repeating this process, double wall continuous tubular bodies 1b can be a formed one after another from the double-wall continuous tubular body 1a.

### <Second Cutting step>

Next, according to Fig. 6, the second cutting step for cutting a predetermined inner wall part Z of the double wall single tubular body 1b obtained by the above first cutting step will be explained.

First, a second cutting device denoted by the reference numeral 20 is shown such that it is in a state of being returned at the starting point (Fig. 6(A)). By the way, the reference numeral 5x in Fig. 6(A) is schematically representation of the condition of the external wall of the socket part 2a which is being cut off by the first cutting step.

When the single tubular body 1b as the work moves to a predetermined position, a sensor 21 detects the work and then the second cutting device 20 is advanced toward the double wall single tubular body 1b. When the sensor 21 detects the end portion of the discarding tube part 5, the second device 20 proceeds a predetermined distance and then stops (see Fig. 6(B)).

The second cutting device 20 comprises a cutting unit U to be inserted into the internal cavity potion 9 of the double wall single tubular body 1b. Three air cylinders 24 are arranged on their respective predetermined positions in the circumferential direction of the base 23 of the cutting unit U. The air cylinders 24 are actuated to make the chucks to protrude until the chucks 25 are into contact with the inner wall 7, allowing the inner wall 7 of the socket part 2a to be supported and fixed (the step of supporting the inner wall). Subsequently, the motor 26 is initiated and then the tip head part 27 rotatably mounted on the tip portion of the cutting unit U begins to rotate (see Fig. 6(C)).

After a defined period of time, an air cylinder (not shown) provided in the tip head part 27 is actuated and then a cutter Cz held in the tip head part 27 is protruded toward an inner wall part Z (see Fig. 6(A)) to cut off the inner wall 7 in the circumferential direction (see the process of cutting the inner wall, see Fig. 6(D)).

After a defined period of time, the cutter Cz is moved back and held in the rotating unit 27 again. The chuck 25 protruded from the base 23 of the cutting unit U is in a state of holding and fixing a discarding tube part 5 while the second cutting device begins to move back toward the starting portion (the step of removing the discarding tube part, see Fig. 6(E)). At this time, the discarding tube part 5 is separated from the double wall single tubular body 1b and then a double wall corrugated pipe 1c as a final product is formed. By the way, when the cutting unit U moves out of the end of the tube, the rotation of the tip head part 27 is stopped.

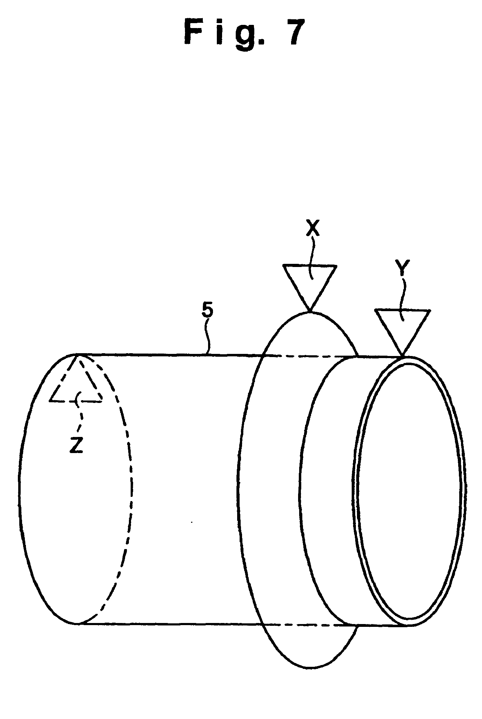

When the separated discarding part 5 is adsorbed and held by a predetermined vacuum unit (not shown), the chuck part 25 moves back to the inside of the base 23. The vacuum unit transfers the discarding unit to a predetermined shoot position and release the adsorption. Consequently, the discarding tube part 5 is dropped and accumulated in a container or the like not shown in the figure, followed by transferring into recycling process. In addition, Fig. 7 shows the appearance of the separated discarding tube part 5.

As shown in Fig. 3(C), the double wall corrugated pipe 1 formed by the above step is constructed of the socket part 2a that exerts a socket function on one end and a slot part 3 to be attached by insertion on the socket part 2b, resulting in coupling to each other to be used for various purposes.

In the following, referring now to Fig. 2 and Fig. 8 to Fig. 10, the preferred embodiment of the "step of maintaining the shape of a socket" to be performed at the time of the molding process of the double wall corrugated pipe of the present invention will be described.

### <Process of Maintaining the Form of Socket>

First, as shown in Fig. 2, a generally tubular hollow chamber 8b obstructed by the external wall of a socket part 6b and a socket part inner wall Kb is formed in the inside of the socket part 2a at the molding stage.

In the molding process, the hollow chamber 8b tends to reduce its volume in proportion to a gradual reduction of temperature and tends to generate negative pressure which pulls the external wall 6b of the socket part inside. If the external wall 6b of the socket part is deformed by warping with the action of negative pressure, it becomes problem because any trouble will be caused on the insertion attachment of the slot part 3.

Therefore, the present invention is designed to stab a needle S having an internal cavity portion communicating with the air into the hollow chamber 8b in the molding process. This permits the hollow chamber 8b obstructed by the external wall 6b and internal wall Kb of the socket part to communicate with the air, making the inner pressure of the hollow chamber 8b equal to atmospheric pressure. Consequently, it becomes possible to effectively prevent the deformation (crushing) of the socket part external wall 6b concurrently occurred by a volume reduction of the hollow chamber 8b with a decrease in temperature in the molding process.

The metallic mold complex K of the molding machine G comprises a metallic mold Ka for the main tube part, which is involved in molding the external wall 6a of the main tube part 4 in the double wall corrugated pipe 1c, a metallic mold Kb (Kb₁, Kb₂) for molding a socket part, which is involved in molding the external wall 6b of a socket part 2a, and a metallic mold Kc for molding a slot part, which is involved in molding the external wall 6c of a slot part 3 (see Fig. 1). These metallic molds Ka-Kc are connected and arranged so as to correspond to the external wall shape.

Here, in the manufacturing method of the present invention, among two metallic molds Kb₁ and Kb₂ constituting the socket part metallic mold Kb, the metallic mold Kb₂ (see Fig. 2) arranged on the backward in the extrusion direction W is designed so as to be equipped with a needle S for forming a pore into a predetermined area of the external wall 6b.

The step of forming a pore (the step of stabbing) with the needle S utilizes the process of successively molding external walls 6 in order in synchronization with the movement of the molding machine G. The needle S attached on the metallic mold Kb₂ forms a pore in a predetermined area of the external wall 6b of the socket part 2a in synchronization with the movement of the molding machine G.

By the way, in the case of a vertical-type molding machine, it takes advantage of its characteristic feature of continuously rotating up and down such that the needles S are attached on the upper and lower sides. In the case of a horizontal type molding machine, the needles S are attached in a horizontal direction in the same idea.

The pore-forming needle S is preferably of having a sharp tip portion Sb like a knife, a hollow like an injection needle, and a tubular shape. The materials thereof include stainless steel, copper, aluminum, glass, and polycarbonate resin. Particularly, stainless steel is preferable. The number of needles to be attached may be one or two.

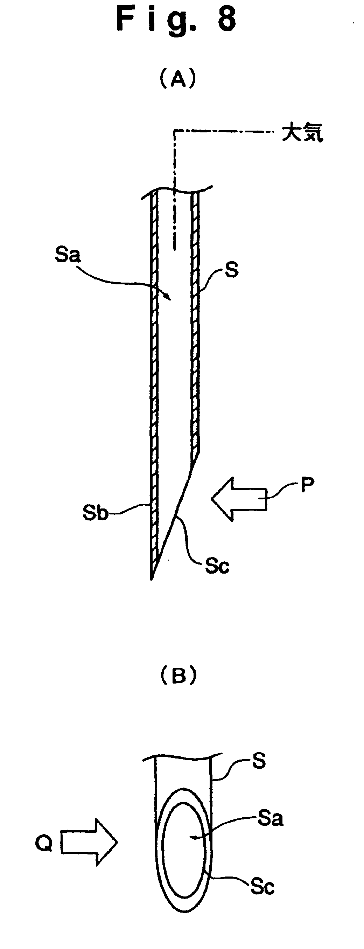

Here, Fig. 8(A) is a partial cross sectional diagram of the periphery of the tip portion Sb of a needle S particularly suitable for the manufacturing production of the present invention. Fig. 8(B) is a partial front diagram viewing the inclined surface Sc of the tip portion Sb of the needle S from the direction of the arrow P in Fig. 3B. The configuration of the need S will be described briefly with reference to these figures.

The needle S has a cylindrical shape with an internal cavity portion Sa. The tip portion Sb is cut off in an oblique direction and is edged sharply and the inclined surface Sc of the tip portion Sb has an opening of the internal cavity portion Sa (see Fig. 2 (B) ) . The internal cavity portion Sa is designed to communicate with the air.

The needle S is attached such that the tip portion Sb thereof is protruded from the inner wall surface of the metallic mold Kb₂ which is involved in the molding of the external wall 6b of the socket part 2a (see Fig. 2). The needle S is stabbed into the outside of the external wall 6b of the socket part 2a by the metallic mold Kb₂ in timing with the molding of the external wall 6b of the socket part 2a, so that the tip portion Sb having the opened inclined surface Sc can be stabbed and inserted into the hollow chamber 8b. Consequently, the needle S fulfills a role of allowing the hollow chamber 8b to communicate with the air.

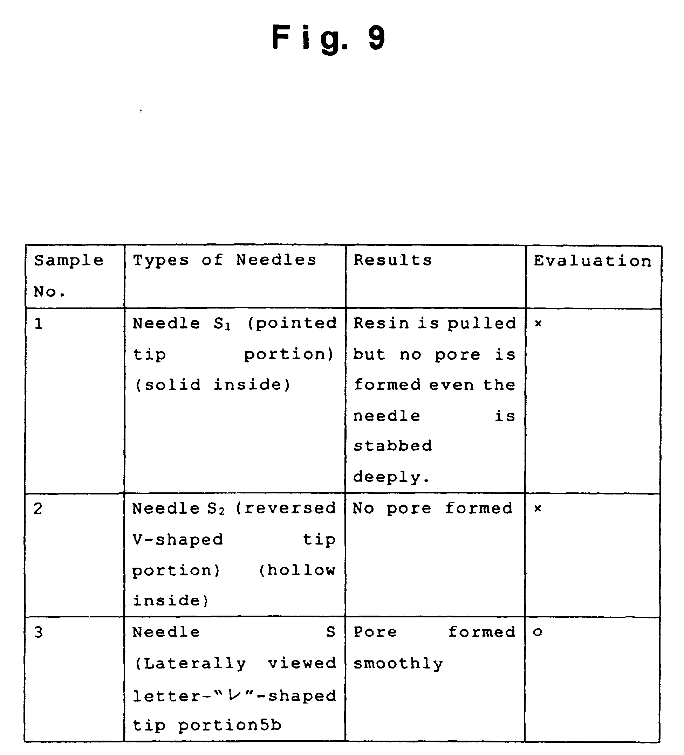

Here, the inventors of the present application conducted the first examination for the selection and verification of a suitable needle for the invention. The results are shown in Fig. 9(Table).

By the way, the present first examination was carried out under the following conditions: corrugated tube material: polyethylene resin; product dimensions: 250 mm in inner diameter and 10 mm in thickness, material of needle: stainless steel, and outer diameter of needle: 8 mm. The evaluation was conducted by visually observing the external appearance and evaluated on a two scale. Here, in Fig. 9(Table), "x" represents failure as a pore is not opened and "o" represents good as a pore is smoothly formed, respectively.

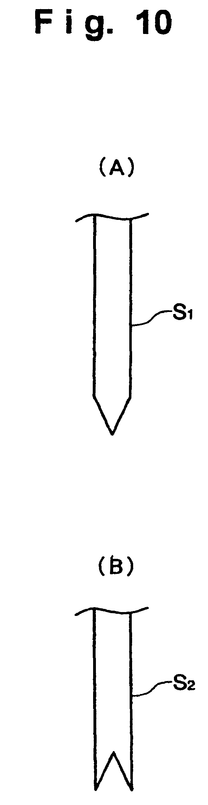

As is evident from Fig. 9(Table), it is found that the needle suitable for the manufacturing method of the present invention is a needle having the conformation represented by the reference numeral S in Fig. 8. That is, the needle has the tip portion Sb having an external appearance of Japanese katakana letter of " 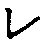 " viewing from the lateral direction (concretely, viewing from the direction of the arrow Q in Fig. 8(A) and Fig. 8(B)). On the other hand, any pore is formed in a needle S₁ having a pointed tip portion shown in Fig. 10(A) and a needle S₂ having a reversed V-shaped tip portion as shown in Fig.10(B). Thus, it is found that these needles are inappropriate. It is conceivable that the friction resistance of the tip portion Sb having the inclined surface Sc as prepared such that the needle S is cut off from one direction is least.

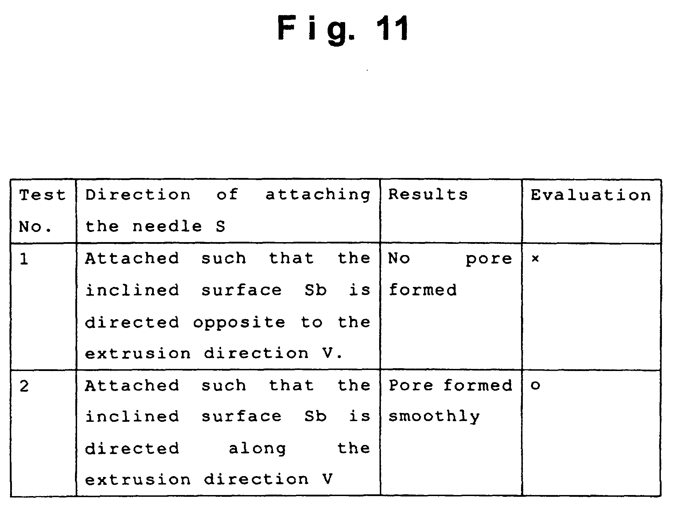

Subsequently, the inventors of the present application conducted a second experiment for determining the direction along which the needle S is suitably attached. The results are shown in Fig. 11(Table) attached. By the way, the present second examination was carried out under the following conditions: corrugated tube material: polyethylene resin; product dimensions: 250 mm in inner diameter and 10 mm in thickness, material of needle: stainless steel, and outer diameter of needle: 8 mm. The evaluation was conducted by visual observation with a two-scale evaluation. Here, in Fig. 11 (Table), "x" represents failure as a pore is not opened and "o" represents good as a pore is smoothly formed, respectively.

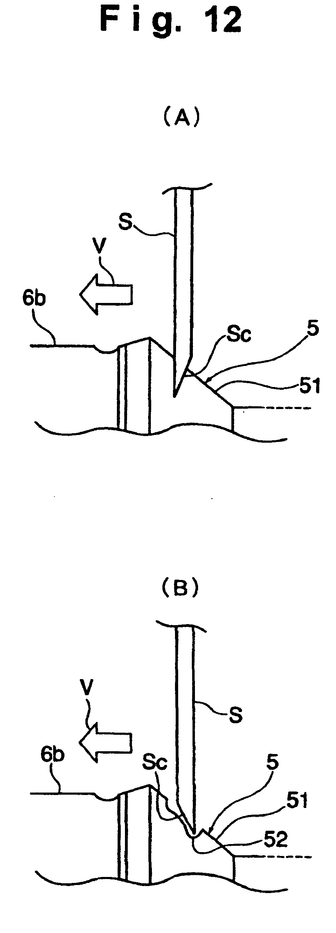

Subsequently, Fig. 12 is a diagram for concretely explaining the status of pore opening carried out in the second experiment, where Fig. 12 (A) shows the status of pore opening in Test No. 1 and Fig. 12 (B) shows the status of pore opening in Test No. 2.

First, in this second experiment, the tip portion Sb of the needle S was designed so as to be stabbed and inserted after selecting the inclined wall surface 2c₁ of a discarding tube part 5 situated next to the socket part 2b in the molding process. For this reason, the discarding tube part 5 is a portion to be cut and removed, so that there is no problem whether any pore is formed or not. Besides, the tip portion Sb having a warped opening (an opening like one obtained by cutting a cylinder off in an inclined direction) formed by stabbing the inclined wall surface 51 (of the discarding tube part 5) being inclined in the direction opposite to the direction V of extrusion molding is stabbed like a shovel being dug in the grand, so that it reduces its friction resistance much more. In other words, the inclined wall surface 51 of the discarding tube part 5 is the most suitable position for pore opening when the needle S is stabbed and inserted while the inclined surface Sc thereof is directed opposite to the extrusion direction V.

As is recognized from Fig. 11 (Table) and Fig. 12 relevant to the second examination, Test No. 1 in the second examination, i.e., the configuration of the needle S where the inclined surface Sc is directed opposite to the extrusion direction V (see Fig. 12(A), allows the needle S to be smoothly stabbed and inserted. However, Test No. 2, i.e., the configuration of the needle S where the inclined surface Sc was directed along the extrusion direction V, only compressed and deformed the inclined wall surface 51 (see the reference numeral 52 in Fig. 12(B)), bud did not form a pore.

As described above, in the manufacturing method of the present invention, when the inclined surface Sc of the tip portion Sc of the needle S is stabbed and inserted while orienting in the direction opposite to the extrusion-molding direction, it is apparent that a pore can be formed more easily compared with the case in which the inclined surface Sc is oriented in the same direction as that of extrusion molding.

### Industrial Applicability

The method for manufacturing the double wall corrugated pipe of the present invention has the following industrial applicabilities:
(1) A complicated process, in which a double-wall continuous tubular body being currently extrusion molded is segmented to obtain a double wall single tubular body, and then a discarding tube part is cut off and removed from the double wall single tubular body to obtain a double wall corrugate, is automated, so that it can be surely and simply carried out. therefore, working efficiency and productivity can be raised.
(2) A needle mounted on a metallic mold that molds the external wall of a socket part is capable of allowing a hollow chamber between inner and external walls to communicate the air easily in synchronization with the movement of a molding machine. Thus, a double wall corrugated pipe having a socket part of a uniform shape without any deformation can be surely manufactured in large quantities. In addition, the method for manufacturing a double wall corrugated pipe of the present invention allows the formation of a pore in the external wall of a socket part even though there is no requirement of any complicate device and there is no need to make complicate arrangements at the time of manufacture. Therefore, the device costs can be reduced while working efficiency can be increased.
(3) In the molding process, there is no deformation of the external wall shape of the socket part. Thus, in the first cutting step, the cutter (Cx) is brought into contact with the external wall portion (X) of the socket part in accordance with setting, so that the desired cutting operation can be surely performed.

## Claims

1. A method for manufacturing a double wall corrugated pipe having a slot part on one end, a socket part on the other end, an external wall of a continuous irregular shape, and an inner wall of a tubular shape by subjecting a thermoplastic resin to extrusion molding,
comprising at least:
a first cutting step in which a double-wall continuous tubular body to be extrusion molded in a state of which the socket part and the slot part are being coupled together is cut off at an external wall part corresponding to the end portion of the socket part and at an external wall part corresponding to the end of the slot part; and
a second cutting step in which a cutting unit is inserted to a predetermined position from a socket part side opening to an internal cavity portion of the double wall single tubular body obtained in the first cutting step, and the inner wall is cut off in a circumferential direction while a cutter protruded from the cutting unit is brought into contact with an inner wall part from which the socket part is started.

2. A method for manufacturing a double wall corrugated pipe as described in Claim 1, wherein
the second cutting step includes at least the steps of:
supporting the inner wall by striking a chuck part protruded from the cutting unit on the inner wall;
after the previous step, cutting the inner wall by the cutter protruded from a tip head part of the cutting unit to the inner wall portion Z, while rotating the tip head part; and
after the previous step, removing a discarding tube part by housing the cutter in the tip head part, and pulling out the discarding tube part separated from the double wall single tubular body, while retaining the discarding tube part.

3. A method for manufacturing a double wall corrugated pipe as described in Claim 1 or 2, further comprising the step of maintaining the shape of the socket part in a molding step before the first cutting step, wherein
before a tubular body to be extrusion molded is cooled down, a needle is stabbed into the external wall of the socket part to allow the hollow member of the socket part to communicate with the air to prevent deformation of the external wall of the socket part accompanied with a decrease in temperature.
